## Europäisches Patentamt

## European Patent Office

## Office européen des brevets

(19)

(11) Veröffentlichungsnummer: **0 293 776**
**B1**

(12) **EUROPÄISCHE PATENTSCHRIFT**

(45) Veröffentlichungstag der Patentschrift:
**19.09.90**

(51) Int. Cl.⁵: **C02F 1/26**

(21) Anmeldenummer: **88108484.2**

(22) Anmeldetag: **27.05.88**

(54) **Verfahren zur Abtrennung von stickstoffhaltigen Heterocyclen aus wässriger Lösung.**

(30) Priorität: **30.05.87 DE 3718271**

(43) Veröffentlichungstag der Anmeldung:
**07.12.88 Patentblatt 88/49**

(45) Bekanntmachung des Hinweises auf die Patenterteilung:
**19.09.90 Patentblatt 90/38**

(84) Benannte Vertragsstaaten:
**CH DE GB LI**

(56) Entgegenhaltungen:
**EP-A- 0 228 957**

**CHEMICAL ABSTRACTS, Band 85, Nr. 20, 15. November 1976, Seite 379, Zusammenfassung Nr. 148566q, Columbus, Ohio, US; & JP-A-76 39 961 (SUMITOMO CHEMICAL CO.,LTD) 03-04-1976**

(73) Patentinhaber: **HOECHST AKTIENGESELLSCHAFT,**
**Postfach 80 03 20, D-6230 Frankfurt am Main 80(DE)**

(72) Erfinder: **Kohlhaas, Folker, Dr., Akazienring 64,**
**D-6203 Hochheim am Main(DE)**
Erfinder: **Krüger, Karl, Herderstrasse 27,**
**D-6203 Hochheim am Main(DE)**
Erfinder: **Wojtech, Bernhard, Dr., Kelkheimer Strasse 67,**
**D-6232 Bad Soden am Taunus(DE)**

## Beschreibung

Die Verfahren zur Abtrennung von 5- oder 6-gliedrigen Heterocyclen, die im Ring Stickstoff als Heteroatom enthalten, lassen sich in zwei Gruppen aufteilen. Gilt es ein Abwasser von diesen Heterocyclen zu befreien, ohne diese wiederzugewinnen, steht also die Abwasserreinigung im Vordergrund, können kostengünstige Verfahren eingesetzt werden, bei denen es zur Zerstörung der Inhaltstoffe kommt, wie der oxydative Abbau durch Ozonisation bzw. Sauerstoffbehandlung oder der biologische Abbau. Ist aber die Konzentration in der wäßrigen Phase so hoch, daß sich eine Wiedergewinnung lohnt, dann sollte auch eine möglichst vollständige Wiedergewinnung Ziel des Aufarbeitungsverfahrens sein und, damit gekoppelt, eine weitgehende Abtrennung dieser 5- oder 6-gliedrigen, im Ring Stickstoff enthaltenden Heterocyclen aus dem Abwasser. Zu den hierbei in Betracht kommenden Heterocyclen zählen vor allem Pyridin und seine Derivate, die sehr gut wasserlöslich sind und in großer Menge bei der Steinkohlenverkokung in den Gaswäschen und als Kondensate anfallen. Auch in der chemischen Technik sind diese Stoffe bei der Herstellung von Zwischenprodukten, in denen sie als Reaktionskomponenten wirken, in den Ab- und Mutterlaugen zu finden. Andere Heterocyclen wie Piperidin- oder Pyrrolidinderivate werden auch als polare Lösemittel eingesetzt und müssen ebenfalls wiedergewonnen werden. Das erfordert quantitative Wiedergewinnungsverfahren, die außerdem so gestaltet sein müssen, daß eine Abwasserbelastung möglichst vermieden wird.

Adsorptionsverfahren, z.B. an Aktivkohle, sind zwar zur Feinreinigung von wenig belasteten Abwässern gut geeignet, doch ist der verfahrenstechnische Aufwand bei der Aufarbeitung von Abwässern, die diese Heterocyclen in höheren Konzentrationen ( bis etwa 50 Gew.-%) enthalten, viel zu hoch. Hier bietet sich die Destillation als Trennverfahren an, vor allem, wenn der Siedepunkt der abzutrennenden Heterocyclen unter dem des Wassers liegt. Auch bei höher siedenden N-haltigen Heterocyclen ist die destillative Abtrennung aus wäßriger Lösung anwendbar, vorausgesetzt, daß sie mit Wasser Minimumazeotrope (Kp unter 100°C) bilden. Das abgetrennte Destillat enthält aber dann in vielen Fällen einen relativ hohen Wasseranteil. So werden beispielsweise Azeotrope erhalten von Pyridin mit 41,3 Gew.-% Wasser (Kp 93,6°C), von α-Picolin (2-Methylpyridin mit 48 Gew.-% Wasser (Kp 93,5°C, Lutidin (2,6-Dimethylpyridin) mit 51,8 Gew.-% Wasser (Kp 96°C) oder Chinolin mit 96,6 % Wasser. Zur Gewinnung der wasserfreien Heterocyclen ist dann eine azeotrope Destillation mit Zusatzstoffen notwendig, wie Toluol und Methylisobutylketon. Wie aus dem Referat in Ind. Eng. Chem. 37/585 (1945) "Azeotropic Dehydration of Pyridine and its Homologs" zu entnehmen ist, sind dafür größere Mengen an solchen Zusatzstoffen erforderlich, was einen erheblichen energetischen Aufwand bedeutet.

Der Erfindung liegt nun die Aufgabe zugrunde, die Abtrennung der stickstoffhaltigen Komponente durch Extraktion weniger aufwendig zu gestalten.

Es wurde nun gefunden, daß sich 5- oder 6-gliedrigen Heterocyclen mit Stickstoff als Heteroatom im Ring mit nicht-aromatischen Monocarbonsäuren mit mindestens 5 C-Atomen, die im System mit Wasser eine Mischungslücke haben, extraktiv besonders gut abtrennen lassen. Diese haben nicht nur gute Extraktionseigenschaften, wie die Verteilungskoeffizienten ($K_D$), die ein Maß für die Güte des Extraktionsmittels sind, zeigen, sondern darüber hinaus auch einen ausreichend hohen Siedepunkt, der eine destillative Abtrennung der heterocyclischen Komponente aus dem Extrakt erlaubt.

Diese Carbonsäuren können geradkettig oder verzweigt aliphatisch oder cycloaliphatisch sein und noch olefinische Bindungen und/oder nichtfunktionelle Substituenten enthalten. Mit wachsender Kettenlänge nimmt jedoch der extraktionswirksame COOH-Anteil gegenüber dem $CH_2$-Anteil laufend ab, so daß der optimale Bereich bezüglich gutem Extraktionsvermögen und geringer Wasserlöslichkeit die Carbonsäuren mit einer Kohlenstoffzahl zwischen 8 und 12 umfaßt. Die Verwendung gesättigter Säuren ist bevorzugt, vorzugsweise solcher, die außer der COOH-Gruppe nur C und H enthalten.

Die Extraktion kann einstufig durch einfaches Ausrühren erfolgen oder durch Kreuzstromextraktion (mehrmaliges Ausrühren mit immer frischem Extraktionsmittel) oder am wirtschaftlichsten durch mehrstufige Gegenstromextraktion. Die Carbonsäure muß im System unter den Arbeitsbedingungen in flüssiger Phase vorliegen. Zweckmäßig ist es, bei Raumtemperatur zu arbeiten, aber es sind im allgemeinen Temperaturen von 0 bis 90, vorzugsweise von 10 bis 50°C anwendbar.

Ein Vorteil der Verwendung von Carbonsäuren ist ihr relativ hoher Siedepunkt (Kp im optimalen Bereich über 220°C), der es erlaubt, die Heterocyclen direkt aus dem Extrakt abzudestillieren und so vom Extraktionsmittel zu isolieren. Sollten bei der Extraktion geringe Wasseranteile in Form von Assoziations- bzw. Komplexverbindungen mit der heterocyclischen Verbindung als Hydratwasser in das Extraktionsmittel übergehen, gehen diese in der Regel mit dem Vorlauf über und können so abgetrennt werden. Falls dieses Hydratwasser als wäßriges Azeotrop mit der heterocyclischen Verbindung abdestilliert, kann dieses ebenfalls im Vorlauf abgetrennt und dann wieder der Extraktion zugeführt werden. Die heterocyclische Verbindung wird dann im Hauptlauf rein und wasserfrei gewonnen, während die Carbonsäure im Kreislauf in die Extraktion zurückgeführt wird.

Restanteile oder sonstige nicht abdestillierte 5- oder 6-gliedrige, im Ring Stickstoff enthaltende Heterocyclen lassen sich außerdem aus der Carbonsäure durch eine einfache, zweckmäßig einstufige, Wäsche mit Mineralsäure leicht und problemlos abtrennen. Diese Methode der Rückextraktion mit konzentrierten oder verdünnten wäßrigen üblichen Mineralsäuren, wie Schwefel-, Salz- oder Salpetersäure, kann vorteilhaft anstelle einer Destillation als Hauptverfahren dort angewendet werden, wo es gilt, thermisch labile bzw. nichtdestillierbare heterocyclische Substanzen aus der Extraktphase (d.i. das mit den Heterocyclen angereicherte Extraktionsmittel), in der sie sich angereichert haben, abzutrennen und so in konzentrierter Form wiederzugewinnen. Das bei den Säurebehandlungen entstandene Gemisch von Säureaddukten läßt sich mit Alkalien wieder spalten; die dann gebildeten freien heterocyclischen Basen können durch übliche Verfahren aufgearbeitet werden, z. B. durch Destillation unter vermindertem Druck. Naturgemäß läßt sich eine größere Konzentrierung erreichen, wenn statt verdünnter konzentrierte Säuren verwendet werden.

Die Extraktion mit höheren Carbonsäuren eignet sich zur Abtrennung von Heterocyclen bzw. Derivaten und Homologen mit einem oder mehreren Stickstoffatomen im Ring. Zweckmäßig enthalten sie insgesamt höchstens 4 ringartig gebundene Stickstoffatome, vorzugsweise höchstens zwei. Von fünfgliedrigen Heterocyclen sind zu nennen Pyrrole, Indole, Oxazole, Thiazole, Imidazole, Pyrazole, Triazole und Tetrazole. Von den sechsgliedrigen Heterocyclen eignen sich für das Verfahren z.B. Pyridine, Chinoline, Diazine wie Pyridazin und Pyrimidin, Triazine und Tetrazine. Das Verfahren ist auch geeignet für Produkte, die aus den genannten 5- und 6-gliedrigen Heterocyclen, deren Bindungssystem aromatischen Charakter hat (Doppelbindungen, durch partielle oder vollständige Hydrierung erhalten werden, wie Piperidin und Pyrrolidin. Solche Verbindungen werden wegen der verstärkten Basizität der Stickstoffatome besonders gut extrahiert. Auch Derivate von diesen und den nicht-hydrierten 5- oder 6-gliedrigen, im Ring Stickstoff enthaltenden Heterocyclen, die zusätzlich noch funktionelle Gruppen ohne aktiven Wasserstoff enthalten, lassen sich vorteilhaft mit den erfindungsgemäß verwendeten Carbonsäuren extraktiv abtrennen.

Das Verfahren soll in den folgenden Beispielen näher erläutert werden.

**Beispiele**

1. Anhand der Verteilungskoeffizienten ($K_D$) wird das Extraktionsvermögen verschiedener höherer Carbonsäuren gegenüber Pyridin und seinen Derivaten aufgezeigt. Die Carbonsäuren sind

**Isononansäure** (Kp über 235°C, verzweigte Monocarbonsäuren mit 9 C-Atomen, Hauptbestandteil ist 3,5,5-Trimethylhexansäure);

**Versatic,-Säure 911** (Shell-chemie, Kp über 230°C, gesättigte aliphatische Monocarbonsäuren von 9 bis 11 C-Atomen mit einer an ein tertiäres C-Atom gebundenen COOH-Gruppe;

**Naphthensäure** (Erdölraffinationsprodukt, Kp über 230°C, alkylsubstituierte Cyclopentancarbonsäuren);

**Laurinsäure** ($C_{11}H_{23}$-COOH, Kp 225°C (100 mm));

**Caprylsäure** ($C_7H_{15}$COOH, Kp 237°C.

Dazu wurden die wäßrigen Ausgangslösungen (= Speiselösung) mit dem Extraktionsmittel (Carbonsäuren) bei einem Phasenvolumenverhältnis von :1 durch intensives Vermischen bei Raumtemperatur (Laurinsäure jedoch bei 70°C) in Kontakt und ins Gleichgewicht gebracht. Dann ließ man die Phasen absitzen, trennte sie und bestimmte die Konzentration des Inhaltstoffes (stickstoffhaltige heterocyclische Verbindung) in den beiden Phasen. Die Ergebnisse bringt die Tabelle 1, die anhand der Verteilungskoeffizienten ($K_D$) die gute Extraktionswirkung der Carbonsäuren zeigt. Als Speiselösungen dienten waßrige Lösungen mit a) 18,4 Gew.-% Pyridin (= $S_1$); b) 21,6 Gew.-% α-Picolin (2-Methylpyridin) (=$S_2$); c) 10,6 Gew.-% α-Picolin (= $S_3$); d) 10,3 Gew.-% 2,6-Lutidin (2,6-Dimethylpyridin) (= $S_4$).

## Tabelle 1

| Speise-lösung | Extraktionsmittel | org. Extraktphase Gew.-% Heterocycl. | wäßr. Raffinatphase Gew.-% Heterocycl. |
|---|---|---|---|
| $S_1$ | Isononansäure | 15,39 Pyridin | 1,61 Pyridin |
| $S_1$ | Versatic-Sre. 911 | 15,36 -"- | 1,66 -"- |
| $S_1$ | Naphthensäure | 14,09 -"- | 2,17 -"- |
| $S_2$ | Isononansäure | 18,30 α-Picolin | 1,57 α-Picolin |
| $S_2$ | Versatic-Sre. 911 | 18,32 -"- | 1,57 -"- |
| $S_2$ | Naphthensäure | 16,90 -"- | 2,04 -"- |
| $S_3$ | Laurinsäure | 10,19 α-Picolin | 0,34 α-Picolin |
| $S_3$ | n-Caprylsäure | 9,75 -"- | 0,41 -"- |
| $S_4$ | Isononansäure | 9,55 2,6-Lutidin | 0,66 2,6-Lutidin |

2. Isononansäure wurde als Extraktionsmittel zur Abtrennung verschiedener wäßriger Lösungen von 5- oder 6-gliedrigen, im Ring Stickstoff enthaltenden, Heterocyclen eingesetzt und die zugehörigen Verteilungskoeffizienten bestimmt. Dazu wurden die einzelnen Lösungen bei Raumtemperatur im Volumenverhältnis von 1:1 ins Gleichgewicht gebracht und dann die Konzentrationen n den Gleichgewichtsphasen bestimmt. In Tabelle 2 sind die Ergebnisse mit den Verteilungswerten zusammengefaßt.

## Tabelle 2

| Extraktstoff. Gew.-% in wäßriger Lösung | | org. Extraktphase Gew.-% Heterocycl. | wäßr. Raffinatphase Gew.-% Heterocycl. |
|---|---|---|---|
| Piperidin | 10,75 | 9,29 | 1,05 |
| Pyrrolidin | 10,40 | 8,67 | 1,31 |
| Indol | 0,20 | 0,198 | 0,02 |
| 2,6-Lutidin | 10,32 | 9,55 | 0,67 |
| Pyrazol | 2,4 | 2,18 | 0,25 |
| Pyrrol | 4,0 | 3,62 | 0,60 |

3. Eine wäßrige Ablauge, bestehend aus 28,0 Gew.-% Pyridin, 8,0 Gew.-% 2-Methylpyridin, 0,2 Gew.-% 3- und 4-Methylpyridin und 0,7 Gew.-% 2,6-Dimethylpyridin entsprechend einer Gesamtkonzentration von 4,495 mol Pyridine/kg, wurde bei Raumtemperatur im Gegenstrom in einem 6-stufigen Mischabsetzer mit ®Versatic-Säure 911 bei einem Phasenvolumenverhältnis Ablauge:Versatic-Säure 2:1 extrahiert. Das wäßrige Raffinat enthielt 0,0086 mmol Pyridine/g (680 ppm), der Extrakt 5,00 mmol Pyridine/g (40,5 Gew.-%). Die Extraktionsausbeute betrug 99,9 %.

4. Eine als Hauptprodukt 2-Methylpyridin enthaltende ablauge, bestehend aus 2,2 Gew.-% Pyridin, 13,9 Gew.-% 2-Methylpyridin, 3,2 Gew.-% 3- und 4-Methylpyridin und 3,8 Gew.-% 2,6-Dimethylpyridin mit seiner Gesamtkonzentration von 2,491 mol Pyridine/kg wurde bei Raumtemperatur im Gegenstrom in einem 5-stufigen Mischabsetzer mit Isononansäure bei einem Phasenvolumenverhältnis Ablauge:Isononansäure von 4:1 extrahiert. Das wäßrige Raffinat enthielt weniger als 0,006 mmol Pyridine/g (unter 550 ppm), der Extrakt 4,955 mmol Pyridine/g (46,2 Gew.-%). Die Extraktionsausbeute war 99,8 %.

## Patentansprüche

1. Verfahren zur Extraktion von stickstoffhaltigen Heterocyclen aus wäßriger Lösung, dadurch gekennzeichnet, daß man Verbindungen, die fünf- oder sechsgliedrige Heterocyclen mit mindestens einem Ringstickstoffatom enthalten, mit Hilfe von nichtaromatischen Monocarbonsäuren mit mindestens 5 C-Atomen als Extraktionsmittel in flüssiger Phase extrahiert.

2. Verfahren nach Anspruch 1, dadurch gekennzeichnet, daß Carbonsäuren mit einer Gesamtkohlenstoffzahl von 8 bis 12 verwendet werden.

3. Verfahren nach Anspruch 1 oder 2, dadurch gekennzeichnet, daß gesättigte Carbonsäuren verwendet werden, vorzugsweise solche, die außer der COOH-Gruppe nur C und H enthalten.

4. Verfahren nach einem oder mehreren der Ansprüche 1 bis 3, dadurch gekennzeichnet, daß die Extraktstoffe unsubstituierte oder mit funktionellen Gruppen ohne aktiven Wasserstoff substituierte stickstoffhaltige Heterocyclen sind mit höchstens vier, vorzugsweise höchstens zwei, ringartig gebundenen Stickstoffatomen.

5. Verfahren nach einem oder mehreren der Ansprüche 1 bis 4, dadurch gekennzeichnet, daß die Extraktion bei einer Temperatur von 0 bis 90, vorzugsweise von 10 bis 50°C durchgeführt wird.

6. Verfahren nach einem oder mehreren der Ansprüche 1 bis 5, dadurch gekennzeichnet, daß thermisch labile, bzw. nicht destillierbare heterocyclische Substanzen aus dem mit den Heterocyclen angereicherten Extraktionsmittel durch Behandlung mit Mineralsäure als Säureaddukt abgetrennt und daraus konzentriert wiedergewonnen werden.

7. Verfahren nach einem oder mehreren der Ansprüche 1 bis 5, dadurch gekennzeichnet, daß man das mit den Heterocyclen angereicherte Extraktionsmittel zur Abtrennung der Heterocyclen einer Destillation unterwirft, wobei das Extraktionsmittel bevorzugt in Kreislauf in die Extraktion zurückgeführt wird.

8. Verfahren nach Anspruch 7, dadurch gekennzeichnet, daß nicht destillierte heterocyclische Substanzen aus dem mit den Heterocyclen angereicherten Extraktionsmittel nach der Destillation durch Behandlung mit Mineralsäuren als Säureprodukte abgetrennt und daraus konzentriert wiedergewonnen werden.

## Claims

1. A process for the extraction of nitrogen-containing heterocyclic compounds from aqueous solution, which comprises extracting in the liquid phase compounds which contain 5- or 6-membered heterocycles having at least one ring nitrogen atom using a non-aromatic monocarboxylic acid having at least 5 carbon atoms as the extractant.

2. The process as claimed in claim 1, wherein the carboxylic acid used has a total number of carbon atoms of 8 to 12.

3. The process as claimed in claim 1 or 2, wherein a saturated carboxylic acid is used, preferably one which contains, besides the COOH group, only carbon and hydrogen.

4. The process as claimed in one or more of claims 1 to 3, wherein the extracted substances are unsubstituted nitrogen-containing heterocycles or nitrogen-containing heterocycles substituted by functional groups not containing active hydrogen, having at most four, preferably at most two, ring-bonded nitrogen atoms.

5. The process as claimed in one or more of claims 1 to 4, wherein the extraction is carried out at a temperature of 0 to 90, preferably of 10 to 50°C.

6. The process as claimed in one or more of claims 1 to 5, wherein the thermally labile or non-distillable heterocyclic substances are separated from the heterocyclic-enriched extractant in the form of an acid adduct by treatment with mineral acid and are recovered in concentrated form from this adduct.

7. The process as claimed in one or more of claims 1 to 5, wherein the heterocyclic-enriched extractant is subjected to distillation to separate off the heterocyclic compounds, the extractant preferably being recycled into the extraction process.

8. The process as claimed in claim 7, wherein the undistilled heterocyclic substances are separated from the heterocyclic-enriched extractant after the distillation in the form of acid adducts by treatment with a mineral acid and are recovered in concentrated form from these adducts.

## Revendications

1. Procédé pour extraire des composés hétérocycliques azotés à partir d'une solution aqueuse, procédé caractérisé en ce qu'on extrait, en phase liquide, des composés qui renferment des hétérocycles pentagonaux ou hexagonaux à au moins un atome d'azote dans le cycle, en utilisant, comme agents d'extraction, des acides monocarboxyliques non aromatiques à au moins 5 atomes de carbone.

2. Procédé selon la revendication 1 caractérisé en ce que l'on utilise des acides carboxyliques dont le nombre total d'atomes de carbone est compris entre 8 et 12.

3. Procédé selon l'une des revendications 1 et 2, caractérisé en ce que l'on utilise des acides carboxyliques saturés, de préférence des acides de ce genre qui, en plus du radical –COOH, ne contiennent que du carbone et de l'hydrogène.

4. Procédé selon l'une quelconque des revendications 1 à 3, caractérisé en ce que les composés à extraire sont des composés hétérocycliques azotés qui ne portent pas de substituant ou qui portent des radicaux fonctionnels sans hydrogène actif et qui renferment au plus 4 atomes d'azote intracycliques, de préférence au plus 2.

5. Procédé selon l'une quelconque des revendications 1 à 4, caractérisé en ce que l'extraction est effectuée à une température de 0 à 90°C de préférence de 10 à 50°C.

6. Procédé selon l'une quelconque des revendications 1 à 5, caractérisé en ce que des composés hétérocycliques thermiquemement instables ou non distillables sont séparés de l'agent d'extraction enrichi en composés hétérocycliques, sous la forme d'un produit d'addition d'acide par traitement avec un acide minéral, et sont récupérés à l'état concentré à partir de ce produit d'addition.

7. Procédé selon l'une quelconque des revendications 1 à 5, caractérisé en ce que, pour séparer les composés hétérocycliques, on soumet à une distillation l'agent d'extraction enrichi en les composés hétérocycliques, l'agent d'extraction étant alors de préférence renvoyé en circuit dans l'extraction.

8. Procédé selon la revendication 7 caractérisé en ce que, après la distillation, des composés hétérocycliques non distillés sont séparés de l'agent d'extraction enrichi en les composés hétérocycliques, sous la forme de produits d'addition d'acides par traitement avec des acides minéraux, et sont récupérés à l'état concentré à partir de ces produits d'addition.